Europäisches Patentamt

European Patent Office

Office européen des brevets

(11) Veröffentlichungsnummer : **0 329 131 B1**

(12) # EUROPÄISCHE PATENTSCHRIFT

(45) Veröffentlichungstag der Patentschrift :
**12.08.92 Patentblatt 92/33**

(51) Int. Cl.⁵ : **G01T 1/06,** G01T 1/10, G01T 7/08

(21) Anmeldenummer : **89102657.7**

(22) Anmeldetag : **16.02.89**

(54) **Gerät zur Messung von Strahlendosen mit Fluoreszenzglasdosimetern.**

(30) Priorität : **18.02.88 JP 34073/88**

(43) Veröffentlichungstag der Anmeldung :
**23.08.89 Patentblatt 89/34**

(45) Bekanntmachung des Hinweises auf die
Patenterteilung :
**12.08.92 Patentblatt 92/33**

(84) Benannte Vertragsstaaten :
**CH DE FR GB LI NL SE**

(56) Entgegenhaltungen :
**FR-A- 2 577 682**
**US-A- 4 589 540**
**PATENT ABSTRACTS OF JAPAN, Band 10, Nr.**
**152 (P-462)[2208], 3. June 1986; & JP-A-61 4987**
**(TOSHIBA GLASS K.K.) 10-01-1986**

(73) Patentinhaber :
**KERNFORSCHUNGSZENTRUM KARLSRUHE**
**GMBH**
**Weberstrasse 5 Postfach 3640**
**W-7500 Karlsruhe 1 (DE)**
Patentinhaber : **TOSHIBA GLASS CO., LTD.**
**3583-5 Kawajiri Yoshida-cho**
**Haibara-gun Shizuoka-ken (JP)**

(72) Erfinder : **Burgkhardt, Bertram**
**Bertha-v.Suttner-Strasse 7a**
**W-7500 Karlsruhe 1 (DE)**
Erfinder : **Piesch, Ernst**
**Württemberger Strasse 5**
**W-7514 Egg.-Leopoldshafen (DE)**
Erfinder : **Ugi, Siegfried**
**Burgstrasse 30**
**W-7504 Weingarten (DE)**
Erfinder : **Junji, Yamada**
**3583-5, Kawajiri Yoshida-cho**
**Haibara-gun Shizuoka-ken (JP)**
Erfinder : **Yasushi, Mawatari**
**3583-5, Kawajiri Yoshida-cho**
**Haibara-gun Shizuoka-ken (JP)**
Erfinder : **Motoyuki, Sato**
**3583-5, Kawajiri Yoshida-cho**
**Haibara-gun Shizuoka-ken (JP)**
Erfinder : **Toru, Ikegami**
**3583-5, Kawajiri Yoshida-cho**
**Haibara-gun Shizuoka-ken (JP)**
Erfinder : **Koichi, Nishio**
**3583-5, Kawajiri Yoshida-cho**
**Haibara-gun Shizuoka-ken (JP)**

(74) Vertreter : **Gottlob, Peter**
**Kernforschungszentrum Karlsruhe GmbH Abt.**
**PAL Weberstrasse 5 Postfach 3640**
**W-7500 Karlsruhe 1 (DE)**

EP 0 329 131 B1

## Beschreibung

Die vorliegende Erfindung betrifft ein Gerät zur Messung der Strahlendosen mit Fluoreszenzglasdosimetern nach dem Oberbegriff des Patentanspruchs 1.

Die Gefahr, der ein Lebewesen ausgesetzt ist, steigt im allgemeinen mit dem Betrag der absorbierten Energie, d.h. mit zunehmender Strahlendosis. Deshalb müssen die Beschäftigten beim Betrieb eines Kernrekators, eines Beschleunigers, eines Röntgengenerators, einer Radioisotopenanlage oder ähnlicher Anlagen vor Strahlung geschützt werden. Für Operateure und Benutzer müssen aus diesem Grund die gemessene Strahlendosis möglichst genau angezeigt und die Strahlendosismeßwerte in angemessener Weise erfaßt und überwacht werden.

Diese Art Photolumineszenzglasdosimeter enthalten jeweils ein Fluoreszenzglaselement (im folgenden "Glaselement" genannt), einen Glaselementhalter (im folgenden "Glashalter" genannt), der das Glaselement hält, sowie ein oberes und ein unteres Gehäuseteil für die Kapsel, die den Glashalter umschließen. Bei Verwendung der Dosimeter werden die Kapseln, d.h. die zusammengeschobenen Gehäuseteile, die den Glashalter enthalten, von Personen getragen oder an geeigneten Stellen abgelegt. Um die Strahlendosen dieser Dosimeter messen zu können, werden die Dosimeter nacheinander in ein zur Messung der Strahlendosen geeignetes Gerät eingeführt.

Ein konventionelles Gerät zur Messung der Strahlendosen dieser Dosimeter besitzt ein Meßteil mit Öffnungsklappe und einen Antrieb. Ein drehbarer Tisch wird drehbar innerhalb des Meßteils angebracht. Die Strahlendosen werden wie folgt gemessen: Zunächst wird der Antrieb in Betrieb genommen, so daß sich der drehbare Tisch vor oder nach dem Öffnen der Klappe mit einer bestimmten Geschwindigkeit dreht. Dann werden die Glashalter von Hand aus den Dosimetern herausgezogen. Weiterhin werden die Glaselemente von Hand aus den Glashaltern herausgezogen und nacheinander in die auf dem drehbaren Tisch befindlichen Halter eingesetzt. Die Glaselemente werden durch Drehen des drehbaren Tischs bewegt. Erreicht ein Glaselement eine vorher festgelegte Meßposition, wird sie mit ultravioletten Lichtstrahlen angeregt. Als Folge davon sendet das Glaselement Fluoreszlicht aus. Die Intensität dieses Lichts wird mit einem Photomultiplier gemessen.

Beim genannten Verfahren zur Messung der Strahlendosen einzelner Dosimeter müssen die Glashalter von Hand aus den Dosimetern gezogen, die Glaselemente ebenfalls von Hand aus den Glashaltern gezogen und die Glaselemente dann von Hand auf dem drehbaren Tisch eingerichtet werden. Das Verfahren ist also kompliziert, und es erfordert auf jeden Fall viel Zeit, die Strahlendosen der Dosimeter zu messen. Mit anderen Worten, die genannte Methode erlaubt keine rasche und kontinuierliche Messung der Strahlendosen von Dosimetern. Da die Glaselemente klein sind, ist es außerdem umständlich, ein Glaselement aus einem Glashalter herauszuziehen und es dann auf den drehbaren Tisch zu legen. Aus dem gleichen Grund ist es auch schwierig, diesen beschwerlichen Vorgang des Herausziehens der Glaselemente aus den Dosimetern zu automatisieren.

Bis heute ist es bei der Erfassung und Überwachung der Strahlungsdosen beruflich Strahlenexponierter üblich, daß diese Personen bei der Arbeit eine Dosimeterkapsel bei sich tragen, die einen Glashalter mit Glaselement enthält. Nach der Arbeit oder nach Ablauf einer bestimmten Zeit wird dann der Glashalter aus der Kapsel entfernt und in ein Strahlendosismeßgerät eingeführt, um die Strahlendosis einer Person zu messen. Die aufgrund der Strahlenexposition entstehenden Fluoreszenzzentren sind relativ stabil. Außerdem klingt die Fluoreszenz nicht sehr stark ab. Sie bleibt erhalten, sofern das Glaselement keiner bestimmten Wärmebehandlung unterzogen wird. Deshalb kann das Glaselement wiederholt eingesetzt und die im Glaselement bei wiederholtem Einsatz akkumulierte Strahlendosis gemessen werden. Außerdem wird die Strahlendosis nach vorgegebenen Überwachungszeiträumen vom Glaselement abgelesen, und jede Meßwertanzeige wird in ein Register eingetragen, so daß die Strahlungsdosis für jeden Zeitraum durch Subtraktion einer Meßwertanzeige von der unmittelbar davorliegenden Anzeige ermittelt werden kann.

Das Messen der Strahlendosis an jedem Glaselement nach bestimmten Zeitabschnitten und das Speichern jedes Meßwerts in einer Datenkartei zusammen mit den anderen Strahlendosismeßwerten ist jedoch äußerst umständlich. Zweifellos ist es genauso umständlich, einen Meßwert aus den früher gemessenen Werten zu bestimmen, um die Strahlendosis für einen bestimmten Überwachungszeitraum zu ermitteln.

Aus der FR-A-2 577 682 ist eine Vorrichtung zum Auswerten einzelner Dosimeter bekannt, wobei eine äußere Dosimeterkapsel entfernt werden muß.

Des weiteren ist aus der US-A-4,589,540 eine Vorrichtung bekannt, bei der eine Anzahl von Probenflaschen einzeln einer Auswerteeinrichtung zugeführt werden, wobei die Probenflaschen nicht verändert werden.

Es ist daher das Ziel der vorliegenden Erfindung, ein Gerät bereitzustellen, in dem Dosimeter nacheinander zugeführt, Glashalter automatisch aus den Dosimetern herausgezogen und Glaselemente automatisch aus den Glashaltern gezogen und in bestimmte Positionen gebracht werden, wobei die Strahlendosen von den Glaselementen kontinuierlich und automatisch abgelesen werden.

Ein weiteres Ziel der vorliegenden Erfindung besteht darin, ein Gerät bereitzustellen, das die in jedem Dosimeter akkumulierte Gesamtdosis sowie die Strahlendosis jedes Dosimeters für bestimmte Überwachungszeiträume anzeigen kann, wodurch Strahlendosen von Einzelpersonen leicht zu überwachen sind.

Im Einklang mit der vorliegenden Erfindung wird ein Gerät zur Messung der Strahlendosen von Fluoreszenzglasdosimetern gemäß Anspruch 1 bereitgestellt. Mit den Fluoreszenzglasdosimetern kann eine Strahlendosis über die Intensität des von der Fluoreszenzlichtaustrittsfläche eines von einem Glaselementhalter gehaltenen Fluoreszenzglaselements bei Anregung dieses Fluoreszenzglaselements gemessen werden. Das genannte Gerät umfaßt einen Magazinwechsler, mit dem mehrere Magazine mit jeweils der gewünschten Anzahl von Dosimetern einzeln zugeführt werden können, eine Magazintransportvorrichtung, mit der die Magazine von der genannten Magazinzufuhrvorrichtung entgegengenommen und in eine bestimmte Position transportiert werden können, eine Dosimeter verschiebe vorrichtung, mit der die Dosimeter einzeln aus dem Magazin herausgeschoben werden können, eine Abziehvorrichtung, durch welche die Dosimeter entriegelt und die unteren Kapselteile des Dosimeters mit jeweils einem Glaselementhalter herausgezogen werden können, eine Glaselementhalter-Transportvorrichtung zum Einrichten der Halter, mit der die Glaselementhalter aus den mit der genannten Transportvorrichtung für das untere Kapselteil herausgezogenen unteren Kapselteilen herausgezogen und in festgelegte Positionen auf einem Meßtisch gebracht werden können, und ein Strahlendosismeßsystem, mit dem das zur Fluoreszenz erforderliche ultraviolette Licht auf die von den durch die genannten Haltereinrichtungsvorrichtungen in eine bestimmte Position gebrachten Glaselementhalter gehaltenen Glaselemente gerichtet wird, um eine Strahlendosis über die Intensität des von jedem Fluoreszenzglaselement ausgehenden Fluoreszenzlichts zu messen.

In dem in der vorliegenden Erfindung beschriebenen Gerät werden mehrere Magazine, die jeweils eine gewünschte Anzahl von Dosimetern enthalten, nacheinander von der Magazinzufuhrvorrichtung in die Magazintransportvorrichtung gebracht. Die Magazintransportvorrichtung bewegt jedes entgegengenommene Magazin waagerecht sowie nach oben und unten, wodurch das Magazin in eine ganz bestimmte Meßposition gebracht wird. Mit der Transporteinrichtung für das untere Kapselteil werden die Dosimeter einzeln von einer Seite jedes in der festgelegten Position befindlichen Magazins zur anderen Seite des Magazins geschoben. Die Dosimeter werden entriegelt, und vom Magazin werden die unteren Kapselteile der Dosimeter, die jeweils einen Glaselementhalter enthalten, herausgezogen. Dann zieht die Haltereinrichtungsvorrichtung die Glaselementhalter aus den unteren Kapselteilen heraus und richtet die Halter an festgelegten Positionen auf dem Meßtisch ein. Danach kann ein Glashalter kontinuierlich aus jedem Dosimeter herausgezogen und eine Strahlendosis des Glaselements automatisch gemessen werden.

In einer Ausführungsform der Erfindung befindet sich auf dem Glaselementhalter, der das Fluoreszenzglaselement trägt, oder auf dem Dosimeter mit dem Glaselementhalter oder auf beiden ein Erkennungscode. Die Magazine mit den Dosimetern werden von einer Magazintransportvorrichtung in eine bestimmte Position gebracht. Eine Vorrichtung zum Herausziehen des unteren Kapselteils drückt die Dosimeter einzeln aus jeder Magazinposition heraus. Mit der Einrichtung zum Ablesen des Erkennungscodes wird von dem an jedem Dosimeter oder an dem aus dem Dosimeter herausgezogenen Glaselementhalter befindlichen Erkennungscodebereich ein Erkennungscode abgelesen. Die Datenkontrolleinheit mißt die Strahlendosis des Fluoreszenzglaselements, speichert die Meßwerte zur Bestimmung der Strahlendosis mit Hilfe des Erkennungscodes, der mit der genannten Erkennungscodeableseeinrichtung abgelesen wird, und bestimmt die aus der vorangehenden Messung ermittelte Dosis zur Erfassung und Überwachung der Strahlungsdosis.

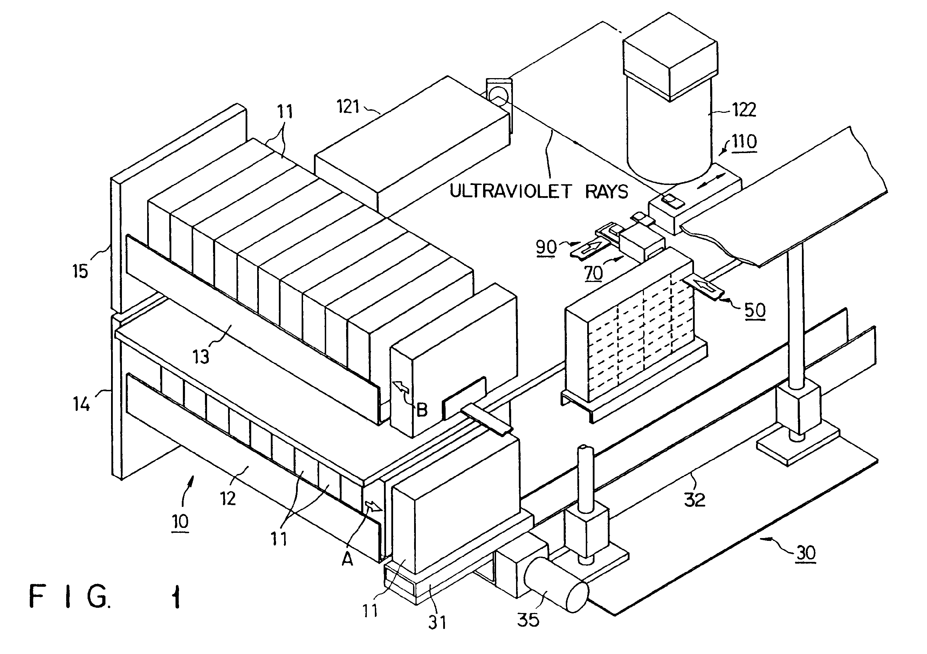

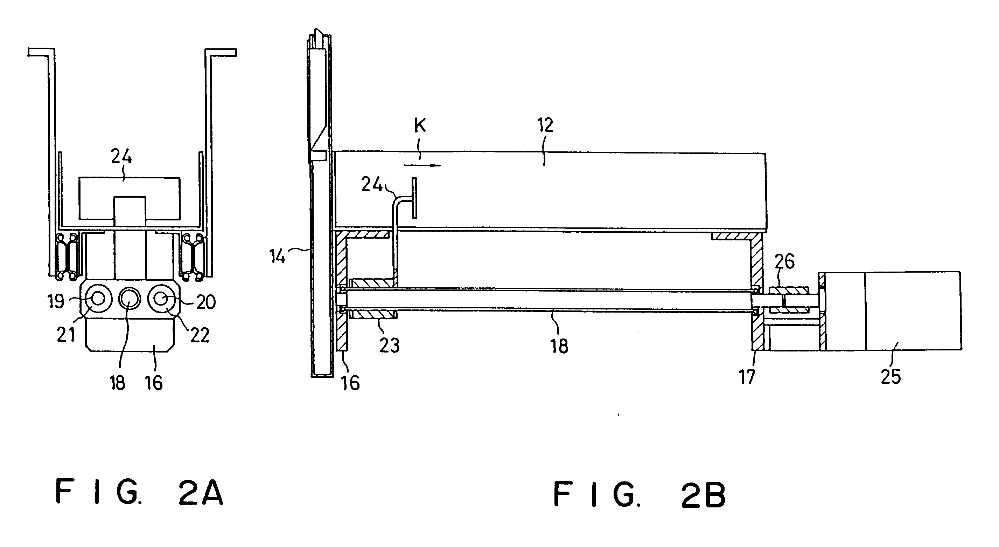

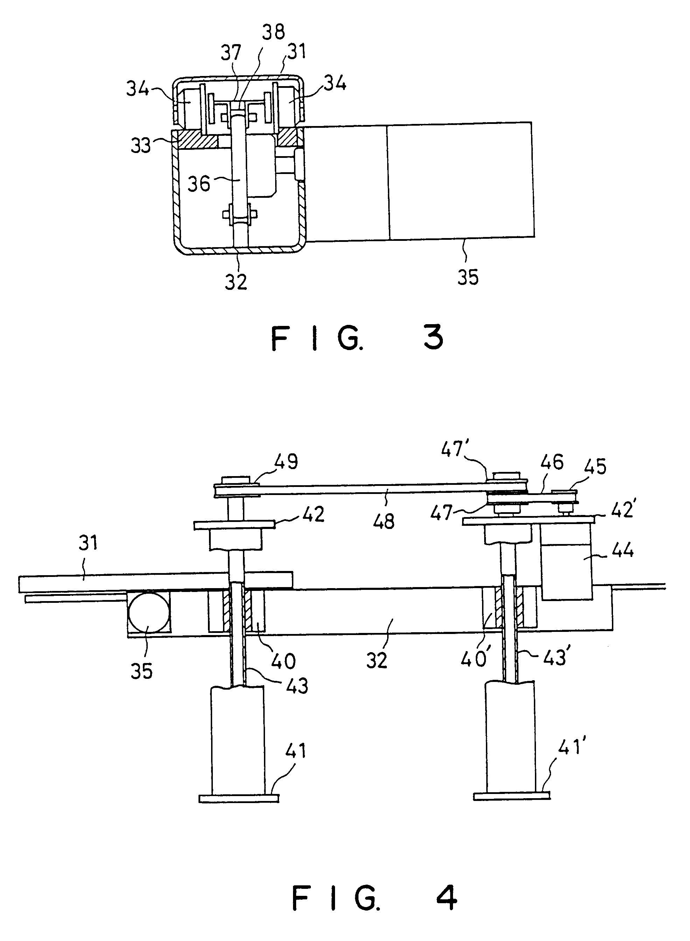

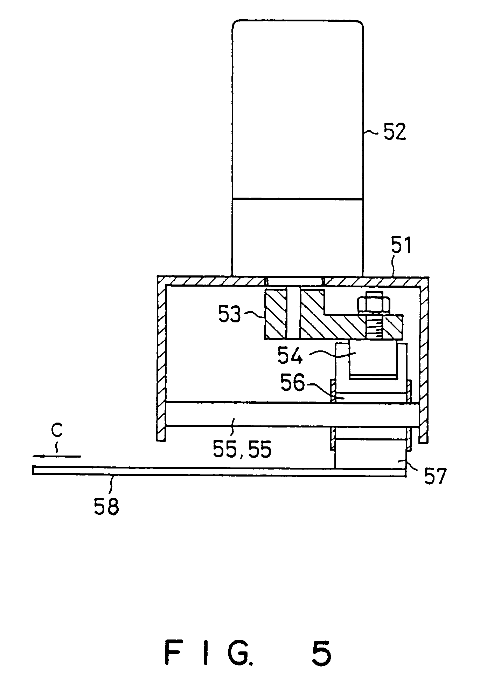

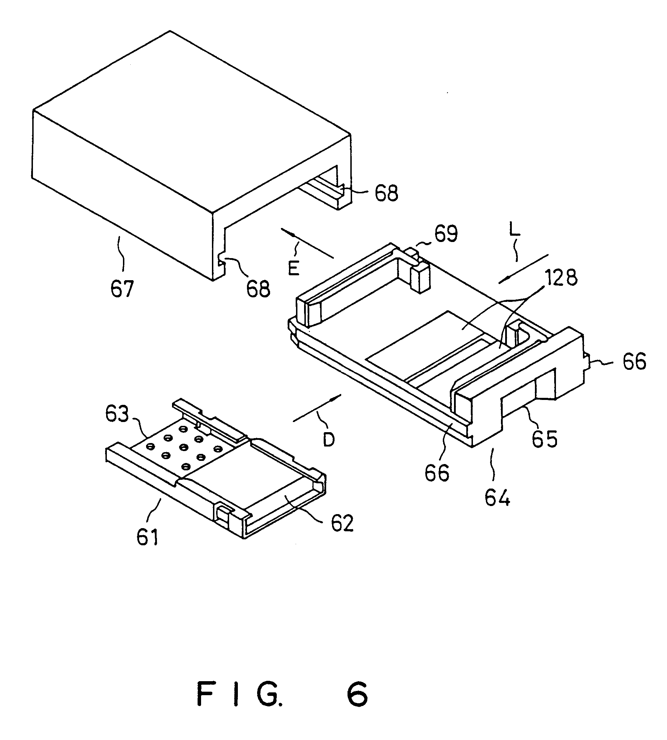

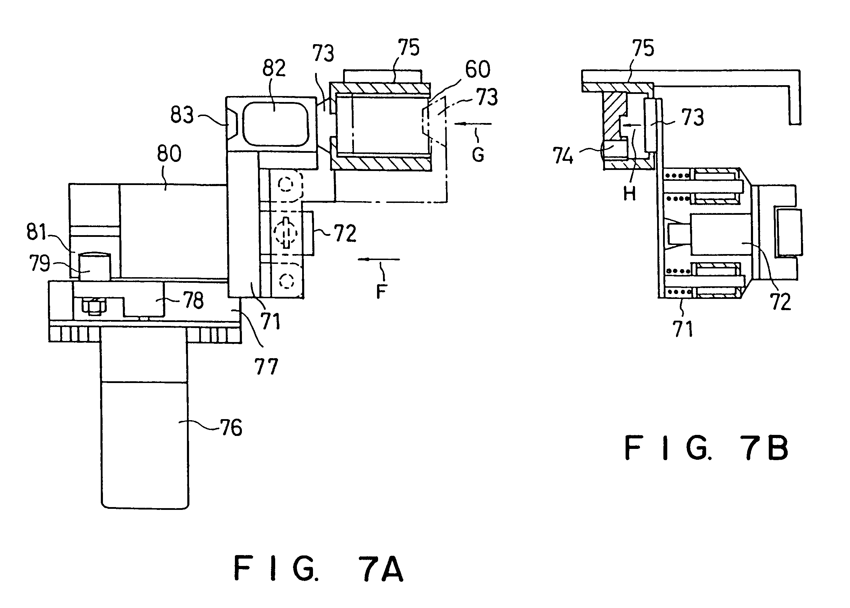

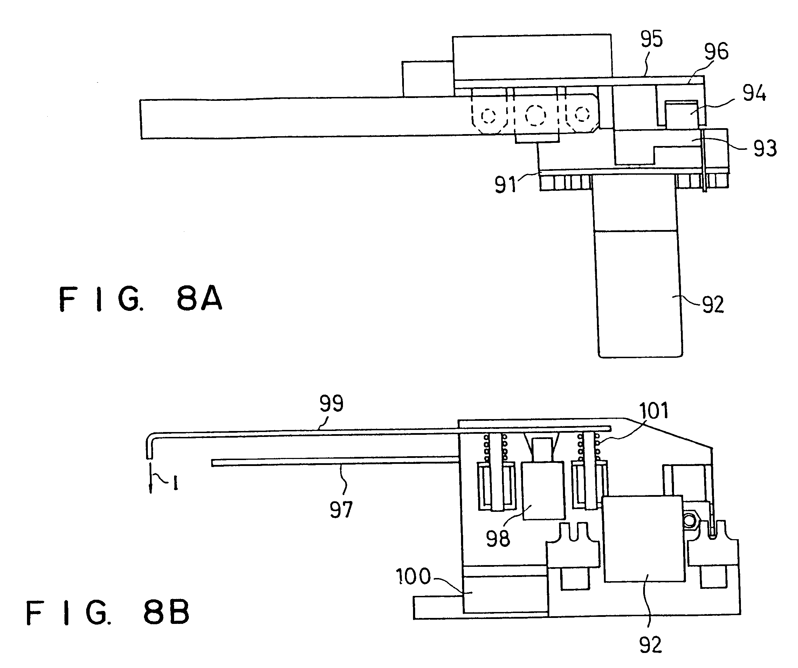

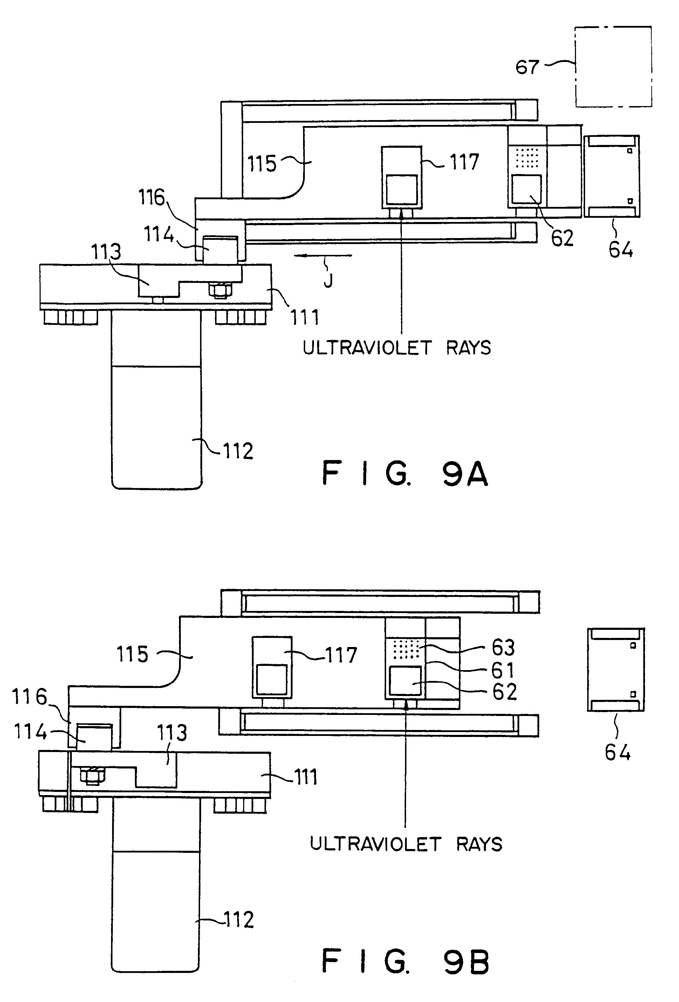

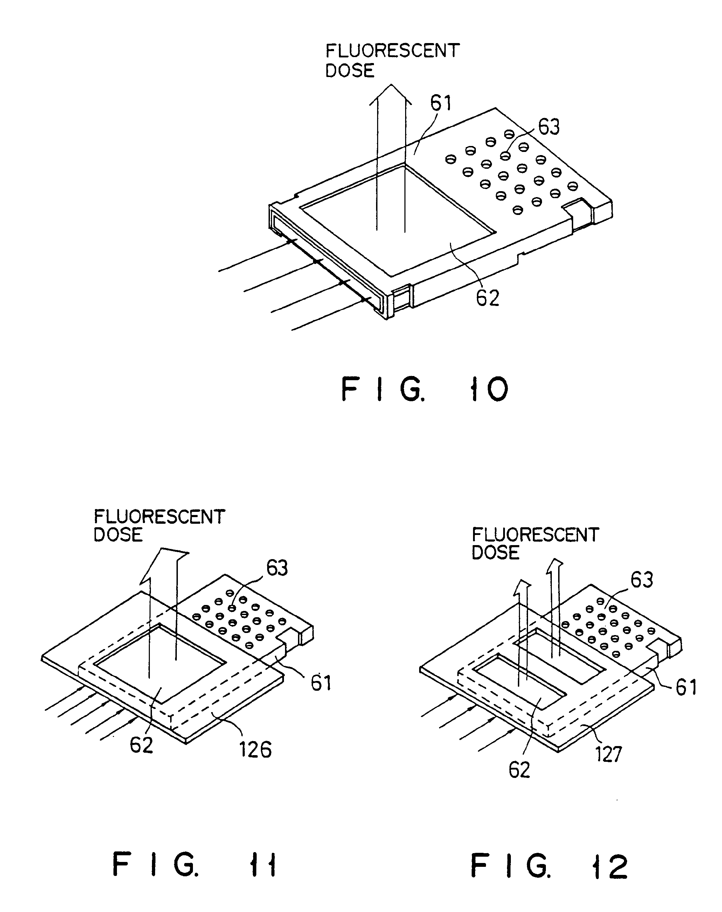

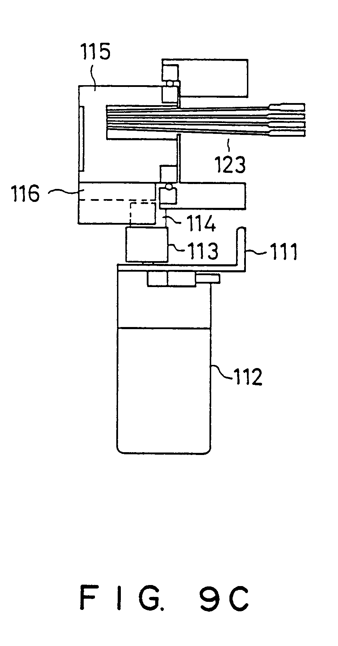

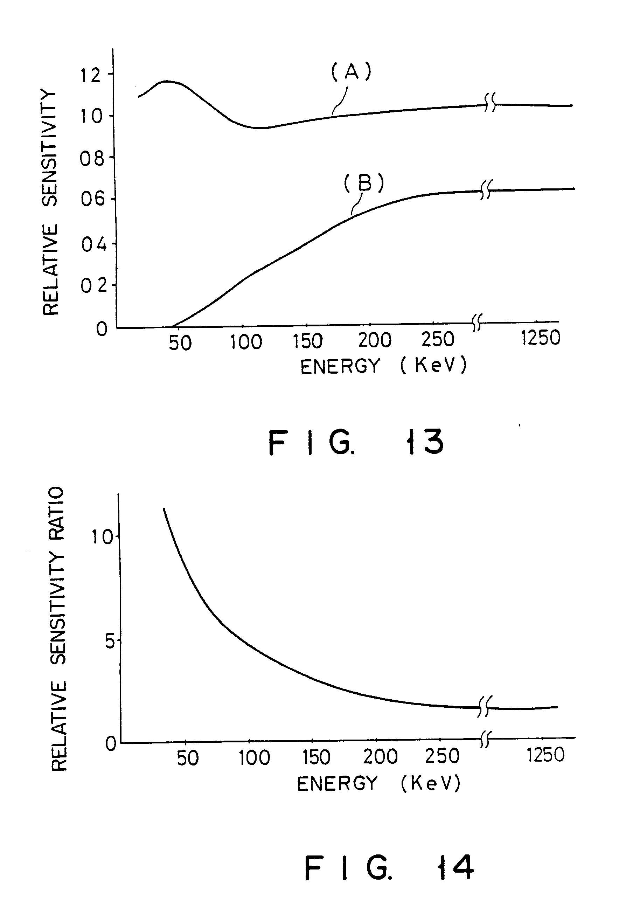

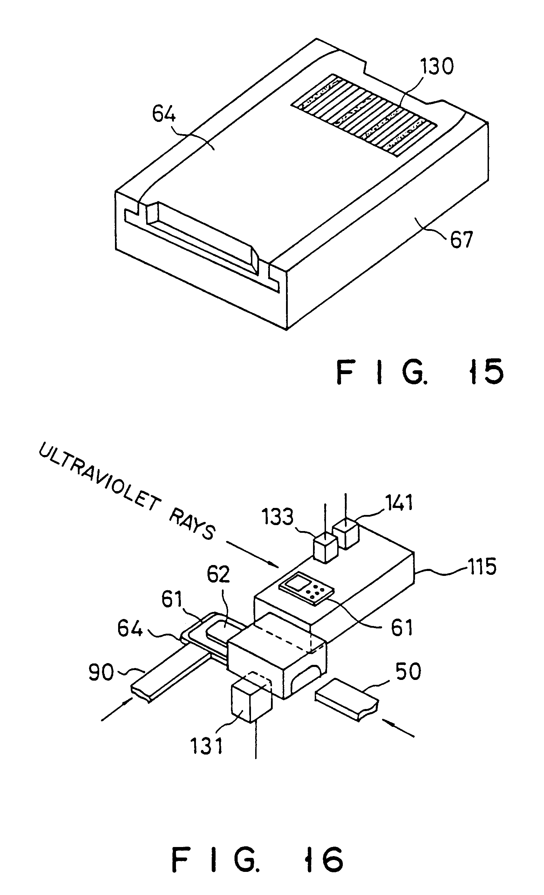

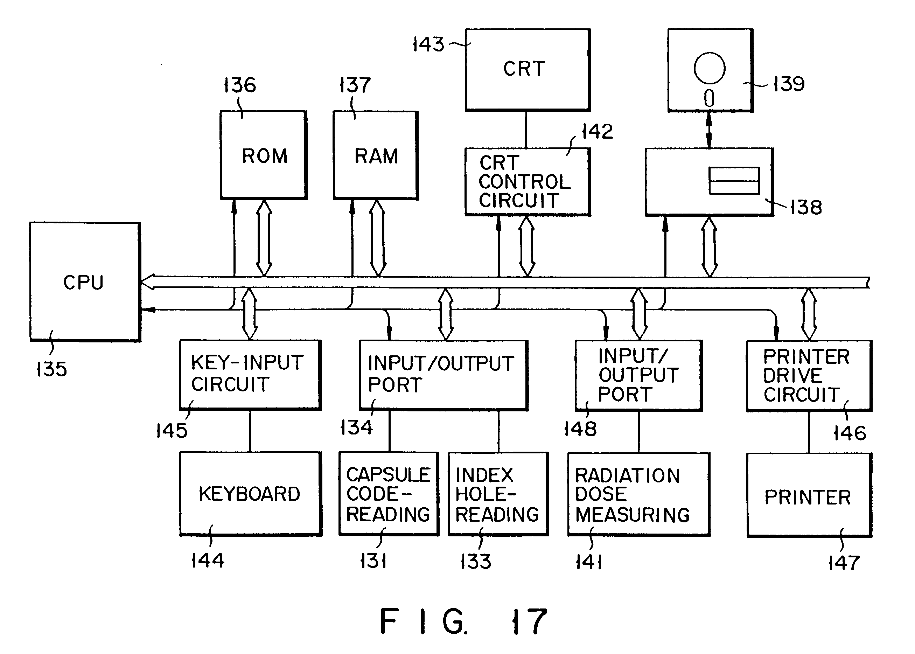

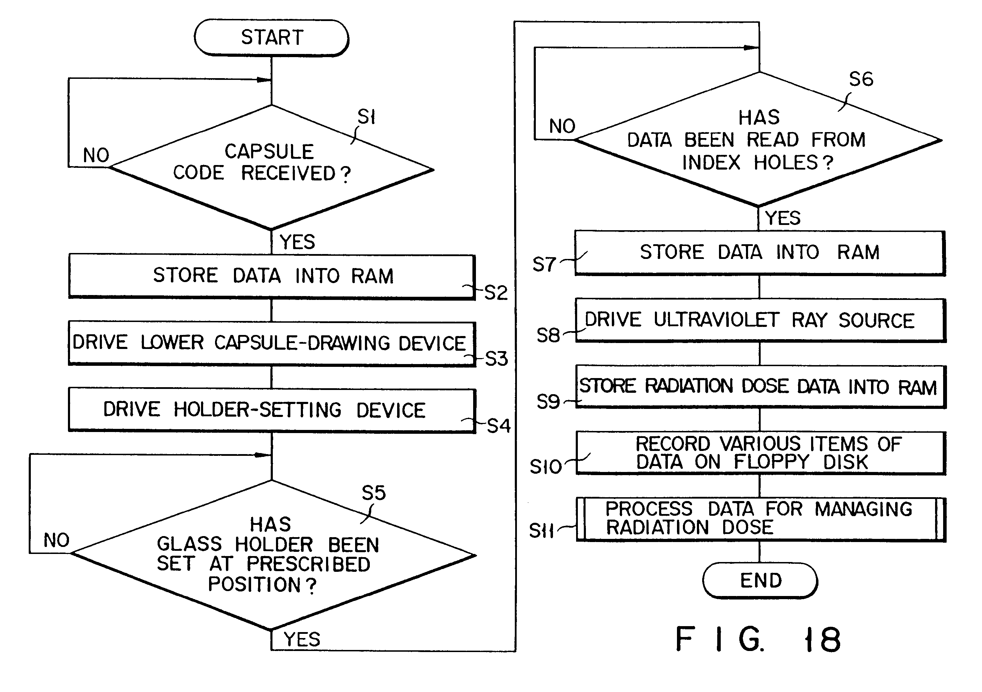

Fig. 1 bis 9 zeigen das Gerät zur Messung der Strahlendosen von Dosimetern, das ein erstes Ausführungsbeispiel der vorliegenden Erfindung ist. Im einzelnen zeigt Fig. 1 eine perspektivische Ansicht des Geräts von schräg hinten. Fig 2(a) und 2(b) zeigen die Vorderansicht und ein Teilschnittbild des im Gerät benutzten Magazinzufuhrmechanismus. Fig. 3 und 4 sind Teilschnitte der Magazinverstelleinheit und der Magazinhebeeinheit, die beide in das Gerät eingebaut sind. Fig. 5 ist ein Teilschnitt der im Gerät eingesetzten Dosimeterschiebevorrichtung. Fig. 6 ist eine Darstellung der Einzelteile eines Dosimeters. Fig. 7(a) ist eine Draufsicht und Fig. 7(b) eine Seitenansicht der im Gerät benutzten unteren Kapseltransportvorrichtung. Fig. 8(a) ist die Vorderansicht und Fig. 8(b) die Seitenansicht der Haltereinrichtvorrichtung im Gerät. Fig. 9(a), 9(b) und 9(c) sind Draufsichten bzw. eine Seitenansicht des Strahlendosismeßsystems; die Seitenansicht zeigt ein Teil für das Ablesen der Daten vom Lochcode eines Glashalters. Fig. 10 bis 14 zeigen ein weiteres Ausführungsbeispiel der vorliegenden Erfindung. Fig. 10 ist eine perspektivische Ansicht eines Glashalters, wobei sich über dem Halter keine Blenden befinden. Fig. 11 und 12 sind perspektivische Ansichten des Glashalters mit Blende über dem Halter. Fig. 13 zeigt zwei Kurven des relativen Ansprechvermögens. Fig. 14 zeigt eine graphische Darstellung des Verhältnisses der relativen Ansprechvermögen, dargestellt durch Kurven. Fig. 15 bis 18 zeigen ein weiteres Ausführungsbeispiel der vorliegenden Erfindung. Im einzelnen zeigt Fig. 15 den Kapselcode auf einem Dosimeter. Fig. 16 zeigt die Lage der Codeableseteile zueinander und außerdem das Strahlendosismeßteil. Fig. 17 ist die graphische Darstellung eines Systems zur Erfassung und Überprüfung der Strahlendosis jeder Person, die Strahlung ausgesetzt sein kann. Fig. 18 ist ein Fließschema der Arbeitsweise dieses Systems.

Ein Ausführungsbeispiel der vorliegenden Erfindung wird nun unter Bezugnahme auf die beigefügten Zeichnungen beschrieben. Fig. 1 ist eine perspektivische Darstellung des im Ausführungsbeispiel beschriebenen Geräts, gesehen von schräg hinten. Wie aus der Figur ersichtlich, umfaßt das zur Anzeige von Strahlendosen ausgelegte Gerät einen Magazinwechsler 10, eine Magazintransportvorrichtung 30, eine Dosimeterschiebevorrichtung 50, eine Abziehvorrichtung für das untere Kapselteil 70, eine Haltertransportvorrichtung 90 und ein Strahlendosismeßteil 110. Der Magazinwechsler 10 nimmt die Magazine einzeln entgegen. Jedes Magazin enthält beispielsweise 50 Dosimeter mit jeweils einem oberen und einem unteren Kapselteil. Die Magazintransportvorrichtung 30 transportiert das Magazin vom Magazinwechsler 10 in eine vorgeschriebene Position. Die Dosimeterschiebevorrichtung 50 schiebt die Dosimeter einzeln von der Rückseite des von der Magazintransportvorrichtung 30 in die vorgeschriebene Position beförderten Magazins. Die Abziehvorrichtung für das untere Kapselteil 70 zieht das untere Kapselteil jedes aus dem Magazin herausgeführten Dosimeters heraus. Das untere Kapselteil enthält einen Glashalter. Mit der Glaselementhaltertransportvorrichtung 90 wird der Glashalter vom unteren Kapselteil herausgenommen und in eine Position gebracht, in der eine Strahlendosis des im Glashalter enthaltenen Glaselements gemessen wird. Das Strahlendosismeßteil 110 mißt eine Strahlendosis jedes in diese Position gebrachten Glaselements, während das Glaselement gleichzeitig kalibriert wird. In Fig. 1 emittiert der Stickstoff-Glaslaser 121 ultraviolettes Licht zur Fluoreszenzanregung der Glaselemente, und ein über dem in die genannte Position gebrachten Glaselement befindlicher Photomultiplier 122 mißt die Intensität des von der Fluoreszenzlichtaustrittsfläche jedes Glaselements ausgehenden Fluoreszenzlichts.

Die Komponenten 10, 30, 50, 70, 90 und 110 werden nun ausführlicher beschrieben. Der Magazinwechsler 10 ist mit einem unteren Rahmen 12 und einem oberen Rahmen 13 ausgerüstet, auf denen zahlreiche Magazine 11 aufgestellt sind. Die auf dem unteren Schubladenrahmen 12 befindlichen Magazine 11 werden einzeln mittels Magazinzufuhrvorrichtung in Richtung des Pfeils a (siehe Fig. 2) der Magazintransportvorrichtung 30 zugeführt, so daß die Strahlendosen von den Glasdosimetern in jedem Magazin 11 abgelesen werden können. Die Magazine 11 auf dem oberen Rahmen 13 werden einzeln, ebenfalls mittels Magazinzufuhrvorrichtung, in Richtung des Pfeils b von der Magazintransportvorrichtung 30 nach Messung der Strahlendosen des in jedem Magazin 11 enthaltenen Glasdosimeters zugeführt. Die Zahlen 14 und 15 bezeichnen die Vorderseiten der Schubladen 12 und 13.

Gemäß Fig. 2 besitzt die Magazinzufuhrvorrichtung L-förmige Stützen 16 und 17 an den gegenüberliegenden Enden des unteren Rahmens 12. Zwischen diesen Stützen 16 und 17 verläuft die Spindel 18. Ebenfalls zwischen den Stützen 16 und 17, parallel zur Spindel 18, verlaufen die Führungsstangen 19 und 20. Die Lager 21 und 22 sind mit den Stützen 16 und 17 verbunden und tragen die Führungsstangen 19 und 20. Ein mit der Spindel 18 verschraubter Block 23 kann sich vor- und rückwärts bewegen, wobei er von den Führungsstangen 19 und 20 geführt wird, wenn die Spindel 18 sich dreht. Die Magazinschiebevorrichtung 24, die so ausgelegt ist, daß sie die Magazine auf dem unteren Rahmen 12 verschieben kann, ist mit Block 23 verbunden. Der Motor 25 dreht die Spindel 18 und führt dadurch die Magazine 11 zu. Eine Kupplung 26 verbindet die Spindel 18 mit der Welle des Motors 25. Deshalb bewegt im Magazinzufuhrmechanismus die Welle des Motors 25 jedes Mal nach einer bestimmten Zeit und über einen bestimmten Winkel oder mit einer bestimmten Anzahl von Umdrehungen die an dem mit Welle 18 verschraubten Block befestigte Magazinschiebevorrichtung 24 über eine Entfernung entsprechend der Tiefe der Magazine 11 und schiebt damit ein Magazin 11 vom Rahmen 12 auf den Transporttisch 31, der ein Teil der Magazintransportvorrichtung 30 ist.

Die Magazintransportvorrichtung 30 ist mit einer Magazintransporteinheit ausgerüstet, mit der jedes vom Magazinzufuhrmechanismus zugeführte Magazin waagerecht bewegt wird, sowie mit einer Magazinhebeeinrichtung, mit der das Magazin in eine höhere Lage gebracht werden kann. Aus Fig. 3 ist ersichtlich, daß die Magazintransporteinheit die Magazine 11 waagerecht über eine wannenförmige Führungsschiene 32 auf einem auf den Innenflächen der Seitenwände der Führungsschiene 32 verlegten Schienenpaar 33 und ein Paar Rollen 34, die in den Schienen 33 laufen, bewegt. Auf der wannenförmigen Führungsschiene 32 befindet sich zur waagerechten Bewegung der Magazine 11 ein Führungselement 36, das vom Motor 35 gedreht werden kann. Dieses Führungselement 36 ist mit der Transportkette 36 verzahnt, die an dem zwischen den Rollen 34 verlaufenden Zusatzteil 37 aufgehängt ist und die Rollen 34 miteinander verbindet. Jedes Mal, wenn der Motor 35 in bestimmten Zeitabständen über einen bestimmten Winkel oder eine bestimmte Anzahl Umdrehungen ausführt, dreht sich das Führungselement 36 mit, wodurch die Platte 31, die mit der Transportkette 38 durch das Zusatzteil 37 verbunden ist, über eine der Tiefe des Magazins 11 entsprechende Entfernung bewegt wird.

Aus Fig. 4 geht hervor, daß die Magazinhebeeinrichtung im Lager mit Innengewinden 40 und 40' die unteren Stützen 41 und 41' in einem bestimmten Abstand voneinander, die oberen Stützen 42 und 42', ebenfalls in einem bestimmten Abstand voneinander, sowie die von den Stützen 41, 41', 42 und 42' und von den Lagern mit Innengewinde 40 und 40' getragenen Spindeln 43 und 43' umfaßt. Der Motor 44 zum Anheben der Magazine 11 ist an der oberen Stütze 42' angebracht. Die Riemenscheibe 45 ist auf der Welle des Motors 44 montiert. Die Riemenscheiben 47 und 47' sind auf der Spindel 43' befestigt. Der Treibriemen 46 läuft um die Riemenscheiben 45 und 47 und dreht damit die Spindel 43', wenn sich der Motor 44 dreht. Die Riemenscheibe 49 ist auf der Spindel 43 montiert, und der Treibriemen 48 läuft um die Riemenscheibe 47' und 49 und dreht damit die Spindel 43, wenn sich der Motor 44 dreht, so daß die Riemenscheibe 47' gedreht wird. Da beide Spindeln 43 und 43' gedreht werden, wird die Platte 31 nach oben und unten bewegt.

Wie aus Fig. 5 ersichtlich, besteht die Dosimeterschiebevorrichtung 50 aus der Stütze 51 in Form einer umgedrehten Wanne, Motor 52 ist an der Oberseite der Stütze 51 montiert, und der L-förmige Arm 53 ist mit der Welle des Motors 52 verbunden. Die Exzenterrolle 54 ist am Ende des Arms 53 befestigt. Zwei Stangen 55 verlaufen parallel zwischen den senkrechten Wänden der wannenförmigen Stütze 51. Die Lager 56 sind auf diesen Stangen 55 montiert. Der Block 57 wird von den Lagern 56 getragen und liegt damit zwischen den Stangen 55. Die Schiebevorrichtung 58 ist an einem Ende mit der unteren Fläche des Blocks 57 fest verbunden. Wenn sich die Welle des Motors 52 dreht, dreht sich Arm 53, so daß die Exzenterrolle 54 den Block 57 entlang der Stäbe 55 bewegt. Folglich wird die Schiebevorrichtung 58 in Richtung des Pfeils c (Fig. 5) bewegt, d.h. von der rückwärtigen Seite des Magazins 11 an dessen Vorderseite, und drückt damit eines der Dosimeter aus dem Magazin 11 heraus.

Jedes Magazin 11 hat die Form eines Kästchens, das vorne und hinten offen ist; vgl. Fig. 1. Es besitzt einen gitterförmigen Rahmen (gestrichelt dargestellt) zum Halten der Dosimeter. Jedes Dosimeter 60 hat den in Fig. 6 in einer Darstellung der Einzelteile gezeigten Aufbau. Das Dosimeter 60 besteht aus dem Glashalter 61 und dem von einem Ende des Glashalters 61 gehaltenen Glaselement 62. Indexöffnungen 63, die eine Erkennungscodierung für den Glashalter 61 bilden, sind in das andere Ende des Glashalters 61 eingestanzt. Der Glashalter 61 verläuft in Richtung des Pfeils d und wird im unteren Gehäuseteil 64 der Kapsel gehalten. Eine trapezförmige Aussparung 65 ist in die Vorderseite des Gehäuses 64 eingeschnitten. Eine zweite (nicht abgebildete) trapezförmige Aussparung von anderer Größe ist in die Rückseite des Gehäuses eingeschnitten. Zwei Gleitvorsprünge 66 befinden sich auf den Seiten des unteren Gehäuseteils 64 der Kapsel. Das untere Gehäuseteil 64 der Kapsel bewegt sich in Richtung des Pfeils e und wird in das obere Gehäuseteil 67 der Kapsel eingeschoben. An den Innenflächen der senkrechten Wände des oberen Gehäuseteils 67 der Kapsel sind gerade verlaufende Rillen 68 eingeschnitten. Die Gleitvorsprünge 66 passen sich gleitend in die Rillen 68 ein, wenn das untere Gehäuseteil 64 der Kapsel in das obere Gehäuseteil 67 der Kapsel eingesetzt wird. Eine (nicht abgebildete) Blattfeder ist an einem Ende an der Oberseite des oberen Gehäuseteils 67 der Kapsel befestigt. Ein (nicht abgebildeter) Magnetblock ist am anderen Ende der Blattfeder befestigt. Die Blattfeder neigt sich im allgemeinen zum unteren Gehäuseteil 64 der Kapsel und wird damit durch das Verriegelungsteil 69 am unteren Gehäuseteil 64 der Kapsel verriegelt. Wenn ein Magnet in die Nähe des oberen Gehäuseteils 67 der Kapsel gebracht wird, zieht er den Magnetblock an und löst damit die Blattfeder vom Verriegelungsteil 69.

Die Abziehvorrichtung für das untere Kapselteil 70 hat den in den Fig. 7(a) und 7(b) gezeigten Aufbau; mit ihr kann das untere Gehäuseteil 64 der Kapsel des Dosimeters 60 in Fig. 6 herausgezogen werden. Fig. 7(a) ist eine Draufsicht der Vorrichtung 70 und Fig. 7(b) eine Seitenansicht, gesehen in Richtung des Pfeils f in Fig. 7(a). Aus Fig. 7(a) und 7(b) geht hervor, daß die Abziehvorrichtung 70 für das untere Kapselteil aus der Auflage 71 und dem an Auflage 71 befestigten Magneten 72 besteht. Sobald das Dosimeter 60 mit der Vorrichtung 50 in Richtung des Pfeils g gedrückt wurde und in der durch die gestrichelten Linien in Fig. 7(a) angegebenen Position eingerichtet ist, wird der Magnet 72 freigegeben, so daß eine Druckfeder 73 in Richtung des Pfeils h wirkt; vgl. Fig. 7(b). Die Druckfeder 73 ist deshalb in die Aussparung der Innenfläche an der Vorderseite des unteren Gehäuseteils der Kapsel 64 eingepaßt; die genannte Aussparung zeigt in die der Aussparung 65 entgegengesetzte Richtung. Ein in einem in der Kapselführung 75 angebrachten Loch eingepaßter Magnet 74 zieht den (nicht abgebildeten) Magnetblock an. Der Motor 76 ist an der Auflage 77 befestigt. Der Arm 78 ist mit der Welle 76 dieses Motors verbunden. Die Exzenterrolle 79 ist mit dem Ende des Arms 78 verbunden und in die wannenförmige Führungsschiene 81 auf dem Gleittisch 80 eingepaßt. Wenn sich die Welle des Motors 76 nach Einführen der Druckfeder 73 in das untere Gehäuseteil 64 der Kapsel dreht, bewegt sich der Gleittisch 80 in Fig. 7(a) von rechts nach links, wodurch nur das untere Gehäuseteil 64 der Kapsel, das den Glashalter 61 aufnimmt, aus dem Dosimeter 60 herausgezogen und schließlich auf dem Kapseltisch 82 befestigt wird. Ein Vorsprung 83 ist in die Aussparung 65 des unteren Gehäuseteils 64 der Kapsel eingepaßt.

Die Glaselementhaltertransportvorrichtung 90 hat den in den Fig. 8(a) und 8(b) gezeigten Aufbau. Fig. 8(a) ist eine Draufsicht, Fig. 8(b) zeigt die Vorderansicht. Aus den Figuren geht hervor, daß die Glaselementhaltertransportvorrichtung 90 aus der Auflage 91 und dem mit der Auflage 91 verbundenen Motor 92 besteht. Der Arm 93 ist an einem Ende mit der Welle des Motors 92 verbunden. Die Exzenterrolle 94 ist am anderen Ende des Arms 93 befestigt. Wenn sich die Welle des Motors 92 dreht, wird die Schiebevorrichtung 97 nach vorne gestoßen und verläuft dabei auf der auf Auflage 95 montierten Führungsschiene 96, wodurch der Glashalter 61 aus dem unteren Gehäuseteil 64 der Kapsel herausbewegt und der Halter 61 auf dem Dosismeßgerät 110

EP 0 329 131 B1

eingerichtet wird. Ein Magnet 98 wird zur unteren Druckfeder 99 in Richtung des Pfeils i geschoben, sobald das Dosimeter 60 ausgemessen ist. Die Druckfeder 99 bewegt also das Dosimeter 60 auf dem Gleittisch 100 und führt das Dosimeter 60 wieder in das untere Gehäuseteil 64 der Kapsel ein. Die Zahl 101 bezeichnet eine Feder.

Aus Fig. 9(a) und 9(b) geht hervor, daß das Strahlendosismeßteil 110 mit einer Kalibriereinrichtung versehen ist. Der Motor 112 ist mit der Auflage 111 verbunden. Der Arm 113 ist an einem Ende mit der Welle des Motors 112 verbunden. Die Exzenterrolle 114 ist am anderen Ende des Arms 113 befestigt. Die Exzenterrolle 114 rastet in die Führungsschiene 116 ein, auf der sich der Gleittisch 115 in Richtung des Pfeils j bewegen kann. Die Zahl 117 bezeichnet ein Kalibrierfluoreszenzglaselement. Das Strahlendosismeßteil 110 wird wie folgt eingesetzt. Solange keine Strahlendosen von den Glaselementen 62 gemessen werden, dreht sich der Motor 112 und bewegt dabei den Gleittisch 115 in die in Fig. 9(a) gezeigte Position. Folglich kommt ein Kalibrierfluoreszenzglaselement 117 in eine Lage, in der das Fluoreszenzglaselement 117 ultravioletten Lichtstrahlen ausgesetzt ist. Die Kalibriermeßsignale werden von diesem Element angezeigt. Dann wird der Motor 112 angetrieben, und der Gleittisch bewegt sich dadurch weiter in Richtung des Pfeils j in die in Fig. 9(b) gezeigte Position. Folglich wird das vom Glashalter 61 gehaltene Glaselement 62 in eine Position gebracht, in der auf das Glaselement 62 ultraviolettes Licht vom Stickstoff-Gaslaser 121 einwirken, so daß das Glaselement 62 zur Fluoreszenz angeregt wird. Mit dem Photomultiplier 122, der sich über der Fluoreszenzlichtaustrittsfläche des Glaselements 62 befindet, wird die Strahlendosis von Glaselement 62 gemessen.Die gemessene Strahlendosis wird aufgrund der Kalibriermeßsignale korrigiert.

Im allgemeinen ist das Kalibrieren des elektrischen Schaltungskreises einschließlich Photomultiplier 122 eine für die Messung der Strahlendosen unabdingbare Voraussetzung. Um die Strahlendosen einer großen Anzahl von Dosimetern einzeln messen zu können, muß zur Erzeugung von Kalibriermeßsignalen eine Vielzahl von Kalibrierfluoreszenzglaselementen benutzt werden. Immer wenn Strahlendosen einer Reihe von Glaselementen gemessen werden, wird eines davon als Kalibrierfuoreszenzglaselement ausgewählt, und die Kalibrierdosis dieses ausgewählten Kalibrierfluoreszenzglaselements wird gemessen. Die Kalibrierdosis wird mit der von einem beliebigen Glaselement gemessenen Strahlendosis verglichen, so daß die Strahlendosis des Glaselements korrigiert werden kann. Die Verwendung verschiedener Kalibrierfluoreszenzglaselemente führt zu einigen Problemen. Erstens können nicht die Strahlendosen aller Glaselemente genau gemessen werden. Zweitens ist es schwierig, jedes Kalibrierfluoreszenzglaselement zu identifizieren. Drittens ist die Kalibrierung zeitaufwendig. Dagegen bietet die erfindungsgemäße Kalibriereinrichtung des Geräts die folgenden Vorteile. Erstens kann sie automatisch Kalibriermeßsignale erzeugen, indem der Gleittisch 115 bewegt wird, solange keine Strahlendosen der Glaselemente 62 gemessen werden. Zweitens kann sie die Strahlendosen von den Glaselementen kontinuierlich messen, da man unmittelbar vor der Messung der Strahlendosis jedes Glaselements Kalibriermeßsignale erhält. Drittens kann sie daher dazu dienen, die für die Korrektur der von den Glaselementen 62 gemessenen Strahlendosen benötigte Zeit zu verkürzen. Darüber hinaus kann, falls ein Kalibrierfehler vorliegt, dieser verringert werden, da nur ein einziges Kalibrierfluoreszenzglaselement benutzt wird.

Fig. 9(c) zeigt eine Vorrichtung aus Glasfasern 123. Die Lichtstrahlen, die durch die Indexöffnungen 63 des Glashalters 61 gelangen, werden über die Glasfasern optisch angezeigt, so daß der Träger des Strahlendosimeters bzw. der Ort, wo das Dosimeter eingesetzt war, identifiziert werden kann.

Die Arbeitsweise des beschriebenen Geräts wird nun erklärt. Zuerst wird der Magazinzufuhrmechanismus (Fig. 2) des Magazinwechslers 10 betätigt, wodurch Magazine 11 einzeln der Magazintransportvorrichtung zugeführt werden. Der Motor 25 wird angetrieben, so daß sich die Kupplung 26 und die Spindel 18 drehen. Daraufhin bewegt sich der auf der Spindel 18 und den Führungsstangen 19 befestigte Block 23 über die festgelegte Entfernung nach vorn. Während sich Block 23 nach vorne bewegt, bewegt sich die Schiebevorrichtung 24 in Richtung des Pfeils k und drückt das hinterste Magazin 11 vom unteren Rahmen 12 auf den Transporttisch 31 der Magazintransportvorrichtung 30. Die Magazinzufuhrvorrichtung beginnt mit der Zufuhr der einzelnen Magazine 11, nachdem ein nach Messung der Strahlendosen aller aus einem Magazin herausgezogener Dosimeter 60 mit Hilfe der Strahlendosismeßeinrichtung 10 erzeugtes Zeitsignal empfangen wurde, diese Dosimeter ins Magazin zurückgebracht sind und das Magazin dem oberen Rahmen 13 zugeführt wurde.

Wenn dann der Motor 35 der Magazintransportvorrichtung 30 angetrieben wird, dreht sich das an der Welle des Motors 35 befestigte Führungselement 36. Die mit dem Führungselement 36 verbundene Rollenkette 38 sowie das Zusatzteil 37 bewegen den Transporttisch 31, auf dem das Magazin 11 befestigt ist, entlang der Schiene 33 über eine bestimmte Entfernung nach vorne. Bei der Vorwärtsbewegung des Transporttischs 31 oder nachdem dieser Transporttisch 31 über eine bestimmte Entfernung bewegt worden ist, wird der Motor 44 der Magazinhebevorrichtung angetrieben. Die wannenförmige Schiene 32, die mit den Spindeln 43 und 43' verschraubt ist, wird nach oben und unten bewegt. Folglich werden die in Fig. 3 gezeigte Magazintransportvorrichtung und die in Fig. 4 gezeigte Magazinhebeeinheit eingesetzt, um jedes Magazin waagerecht und senkrecht zu bewegen, wodurch die in dem Magazin untergebrachten Dosimeter 60 in die vorher festgelegte Position gebracht werden, in der die Dosimeter 60 mit der Dosimeterschiebevorrichtung 50 aus dem Magazin herausgedrückt werden.

Wenn dann das Magazin 11 in die vorher festgelegte Position gebracht worden ist, wird der Motor 52 der Dosimeterschiebevorrichtung 50 angetrieben. Während der Motor 52 angetrieben wird, bewegt sich die am Ende des mit der Welle des Motors 52 verbundenen Arms 53 befestigte Exzenterrolle 54 auf einer bogenförmigen Bahn.Deshalb bewegt der auf den beiden Stangen 55 aufliegende Block 57 die Schiebevorrichtung 58 über die festgelegte Entfernung in Richtung des Pfeils c. Die Schiebevorrichtung 58 drückt das Dosimeter 60 aus dem Magazin 11 in die Kapselführrunng 75 der Abziehvorrichtung 70 des unteren Kapselteils (Fig. 7) vor dem Magazin 11. Sobald das Dosimeter 60 in die Kapselführung 75 eingesetzt ist, wird der Magnet 72 freigegeben. Dadurch bewegt sich die Druckfeder 73 durch Federdruck in Richtung des Pfeils h, d.h. senkrecht zu der Zeichnungsebene der Fig. 7(a), und wird in die Aussparung des unteren Gehäuseteils 64 der Kapsel eingepaßt. In dieser Position wird der mit der Spitze der an der Decke des oberen Gehäuseteils 67 der Kapsel befestigten Blattfeder verbundene Magnetblock von dem an einem bestimmten Teil der Kapselführung 75 befestigten Magneten 74 angezogen und berührt das obere Gehäuseteil 67 der Kapsel, wobei es der Kraft der Blattfeder entgegenwirkt. Folglich wird der Magnetblock aus dem Verriegelungsteil 69 des unteren Gehäuseteils 64 der Kapsel gelöst. Dann, wenn der Motor 76 angetrieben wird, bewegt sich der Gleittisch 80 über eine festgelegte Entfernung von rechts nach links. Der Magnet 72 und die Druckfeder 73 bewegen sich gleichzeitig und ziehen damit nur das untere Gehäuseteil 64 der Kapsel aus der Kapselführung 75 heraus und befestigen dann dieses Gehäuseteil 64 auf dem Kapseltisch 82.

Sobald das untere Gehäuseteil 64 der Kapsel auf den Kapseltisch 82 gelegt ist, tritt die in Fig. 8(a) und 8(b) gezeigte Glaselementvorrichtung 90 in Aktion. Der Motor 92 der Glaselementhaltertransportvorrichtung 90 wird angetrieben, wodurch sich der Gleittisch 90 von der in den Fig. 8(a) und 8(b) gezeigten Postion nach links bewegt. Dadurch bewegt sich die auf der Auflage 95 aufliegende Schiebevorrichtung 97 nach vorne und schiebt den Glashalter 61 vom unteren Gehäuseteil 64 der Kapsel in Richtung des Pfeils l (Fig. 6). Der Glashalter 61 wird auf diese Weise in die festgelegte Position auf dem Gleittisch 115 gebracht, der Teil des in Fig. 9 gezeigten Strahlendosismeßteils 110 ist.

Nachdem der Glashalter 61 nun auf dem Gleittisch 115 eingerichtet ist, werden die durch die Indexöffnungen 63 gehenden Lichtstrahlen mit Hilfe der Lichtfasern 123 nachgewiesen. Dann wird der Motor 112 angetrieben, und der Gleittisch 150 bewegt sich linear in Richtung des Pfeils j über eine festgelegte Entfernung und bringt damit den Glashalter 61 in die Position, in der das Kalibrierfluoreszenzglaselement 117 ultravioletten Lichtstrahlen ausgesetzt ist. Mit anderen Worten, der Halter 61 befindet sich in der Meßposition. Der Stickstoff-Gaslaser 121 emittiert ultraviolette Lichtstrahlen in Richtung des vom Glashalter 61 gehaltenen Glaselements 62. Die Intensität des von der Fluoreszenzlichtaustrittsfläche des Glaselements 62 ausgehenden Fluoreszenzlichts wird vom Photomultiplier 122 gemessen und die Bestrahlungsdosis dadurch bestimmt. Nach Messung der Bestrahlungsdosis wird der Magnet 98 der Glaselementhaltertransportvorrichtung 90 magnetisiert; dadurch senkt sich die Druckfeder 99 in Richtung des Pfeils i. Die Druckfeder 99 hakt einen Glashalter 61 ein und transportiert ihn zurück zum unteren Gehäuseteil 64 der Kapsel. Dann wird die Vorrichtung 70 so betätigt, daß sie das untere Gehäuseteil 64 der Kapsel mit dem oberen Gehäuseteil 67 der Kapsel verbindet, und die Vorrichtung 50 setzt das Dosimeter 60 in das Magazin 11 ein. Nachdem das Dosimeter 60 nach Messung der Strahlendosis wieder in das Magazin 11 zurückgebracht ist, werden sowohl die Magazinverstelleinrichtung als auch die Magazinhebevorrichtung betätigt und bewegen das Magazin in einer vorgeschriebenen Richtung. Dann wird das nächste Dosimeter 60 in die vorgeschriebene Position gebracht. In dieser Position wird dieses Dosimeter 60 mit der Dosimeterschiebevorrichtung 50 aus dem Magazin 11 herausgeschoben. Alle übrigen Dosimeter 60 werden aus dem Magazin 11 herausgeschoben und nach Messung ihrer Strahlendosis wieder in das Magazin 11 zurückgebracht. Dann wird der Magazinzufuhrmechanismus betätigt, so daß das Magazin 11 in den oberen Rahmen 13 gebracht wird. Daraufhin führt der Magazinzufuhrmechanismus das nächste Magazin 11 der Dosimeterschiebevorrichtung 50 zu.

Wie oben erklärt, führt die Magazintransportvorrichtung 30 eine große Anzahl von Magazinen 11 einzeln der Dosimeterschiebevorrichtung 50 zu. Dann drückt die Dosimeterschiebevorrichtung 50 eine vorher festgelegte Anzahl von Dosimetern 60 einzeln aus jedem durch Vorrichtung 30 transportierten Magazin 11. Die Dosimeter 60 werden dann einzeln der Abziehvorrichtung 70 des unteren Kapselteils zugeführt. Die Vorrichtung 70 löst das untere Gehäuseteil 64 der Kapsel jedes Dosimeters 60 aus dem oberen Gehäuseteil 67 der Kapsel heraus. Dann drückt die Glaselementhaltertransportvorrichtung 90 den Glashalter 61 aus dem unteren Gehäuseteil 64 der Kapsel jedes Dosimeters 60 heraus und richtet den Glashalter 61 in einer vorgeschriebenen Position ein, wo die Strahlendosis von dem durch den Glashalter 61 gehaltenen Glaselement gemessen wird. Die Strahlendosen der in jedem Magazin 11 enthaltenen Dosimeter 60 können also nacheinander gemessen werden. Da die Vorrichtungen 90, 70, 50 und 30 auch in umgekehrter Reihenfolge betätigt werden können, werden die Dosimeter 60 nach Messung der Bestrahlung wieder im Magazin 11 gelagert. Daher können Magazine, die eine bestimmte Anzahl von Dosimetern 60 enthalten, automatisch gewechselt und die Strahlendosen der in jedem Magazin gelagerten Dosimeter gemessen werden. Wenn sich das die Dosimeter 60 enthaltende Magazin 11 im unteren Rahmen 12 befindet, können die Dosimeter 60 auch automatisch aus diesem Magazin 11 herausgezogen, und die Strahlendosen dieser Dosimeter 60 automatisch gemessen werden. Auch kann aufgrund der automatischen Auswertung des Dosimeters 60 die Kontamination der Glaselemente verringert werden, und die Strahlendosen können dadurch genauer gemessen werden.

In dem oben beschriebenen Ausführungsbeispiel wird die Glaselementhaltertransportvorrichtung betätigt, nachdem das untere Gehäuseteil 64 der Kapsel aus dem Dosimeter 60 herausgezogen ist; daraufhin wird der Glashalter 61 auf das Strahlendosismeßteil 110 gebracht. Wenn jedoch die Strahlendosis des Glaselements 62 an der Stelle gemessen werden kann, an der das untere Kapselteil aus dem Dosimeter 60 gezogen wird, kann der Glashalter 61 an derselben Stelle gemessen werden.

Bisher wird für die Messung der Strahlendosen mit Glaselementen ein kugelförmiges Glashaltergehäuse, d.h. ein Glaselement in einer kugelförmigen perforierten Filterung zur Herabsetzung der Energieabhängigkeit des Ansprechvermögens für Gamma- und Röntgenstrahlen benutzt (vgl. die japanische Gebrauchsmusterveröffentlichung Nr. 48-29192). Diese Halterung besitzt ausreichend gute dosimetrische Eigenschaften, hat jedoch auch einige Nachteile. Erstens können die Glaselemente nicht automatisch aus dem Haltergehäuse herausgezogen werden, um das in diesen Glaselementen emittierte Fluoreszenzlicht nachzuweisen. Zweitens können die Strahlendosen vieler Glaselemente nicht schnell gemessen werden. Drittens ist das Haltergehäuse kugelförmig oder zylindrisch und damit instabil und nicht einfach zu tragen. In der japanischen Patentveröffentlichung Nr. 50-5595 wird ein Verfahren zur Messung der Energie von Gamma- oder Röntgenstrahlen beschrieben. Nach diesem Verfahren trifft ein dünner Strahl von ultraviolettem Licht auf ein Glaselement auf, so daß man die Differenz der Fluoreszenzintensität zwischen den Fluoreszenzlichtstrahlen erhält, die von verschiedenen Tiefen im Glaselement ausgehen und die Photonenenergie aus der erhaltenen Intensitätsdifferenz abschätzten kann. Mit dieser Methode ist es nicht möglich, die Strahlendosis schnell zu messen.

Die Nachteile kugelförmiger oder zylindrischer Haltergehäuse treten bei den in der vorliegenden Erfindung benutzten und in Fig. 6 abgebildeten Gehäusen 84 und 67 nicht auf, da sie mit einer Verriegelung ausgestattet und so ausgeführt werden, daß sie einen Glashalter 61 mit dem Glaselement 62 aufnehmen können. Da die Gehäuse 64 und 67 im Grunde Hexaeder darstellen, können sie von Personen leicht getragen werden. Außerdem kann der Glashalter 61 leicht aus den Gehäusen 64 und 67 herausgezogen werden, und die Strahlendosis des Glaselements 62 kann schnell gemessen werden. Darüber hinaus können die Gehäuse 64 und 67 in Verbindung mit dem in Fig. 10 und 11 gezeigten Strahlendosismeßteil benutzt werden, um die Strahlendosis des Glaselements 62 zu bestimmen. Wie in Fig. 10 gezeigt, werden die zur Anregung genutzten ultravioletten Lichstrahlen auf eine Schmalseite des Glashalters 61 gerichtet. Mit dem Photomultiplier 122 wird die Menge des von der breiten, senkrecht zum Einfall der ultravioletten Lichstrahlen verlaufenden Halters 61 emittierten Fluoreszenzlichts gemessen. Wird eine Blende 126 mit großer quadratischer Öffnung zwischen Glaselement 62 und Photomultiplier 122 eingesetzt, kann die Strahlendosis des Glaselements 62 bestimmt werden. Wenn darüber hinaus die Blende 126 mit einer quadratischen Öffnung gemäß Fig. 11 und die Blende 127 mit zwei rechteckigen Öffnungen aus Fig. 12 im Wechsel zwischen Glaselement 62 und Photomultiplier 122 eingesetzt werden, kann die Strahlenqualität der Gamma- und Röntgenstrahlen bestimmt werden. Blende 126 ist so konstruiert, daß sie fast das gesamte vom Glaselement 62 emittierte Fluoreszenzlicht nachweist, während Blende 127 so ausgelegt ist, daß sie nur die von denjenigen Teilen des Glaselements 62 emittierte Menge an Fluoreszenzlicht nachweist, die mit Gamma und Röntgenstrahlung über ein Sn-Filter (beispielsweise Filter 128 in Fig. 6) bestrahlt wurden. Fig. 13 zeigt das relative Ansprechvermögen, d.h. die sogenannten "Energieabhängigkeitskurven", die sich aus dem Quotienten von Meßwertanzeige und Bestrahlungsdosis ergeben. Fig. 14 zeigt das Verhältnis des relativen Ansprechvermögens A (Fig. 13) zum relativen Ansprechvermögen B (Fig. 13). Die Energie der Gammastrahlen und die Energie der Röntgenstrahlen können aus der Kurve in Fig. 14 abgeschätzt werden.

Ein Glashaltermagazin-Zufuhrmechanismus ähnlich dem Magazinzufuhrmechanismus kann angebracht werden, um die Magazine mit den Glashaltern zuführen zu können. Außerdem kann eine Vorrichtung zum Einsetzen und Herausziehen von Glashaltern angebracht werden, um einen Glashalter in ein Glashaltermagazin einführen und ihn aus dem Glashaltermagazin wieder herausziehen zu können. Der Glashaltermagazinzufuhrmechanismus und die Vorrichtung zum Einsetzen und Herausziehen von Glashaltern können mit dem automatischen Wechsel der Glashalter kombiniert werden.

Wenn durch eine Datenkontrolleinheit (wird später beschrieben) festgestellt wird, daß die in dem in einem Glashalter gehaltenen Glaselement gemessene Bestrahlungsdosis einen bestimmten Grenzwert übersteigt, wird die Vorrichtung zum Einsetzen und Herausziehen von Glashaltern betätigt und der Glashalter damit in das Glashaltermagazin eingesetzt. Dann werden Magazinverstelleinheit und Magazinhebeeinheit betätigt, so daß sich das Glashaltermagazin in einer bestimmten Richtung bewegt, und ein neuer Glashalter wird an der Stelle eingesetzt, an der sich die Vorrichtung zum Einsetzen und Herausziehen des Glashalters befindet. Mit dieser Vorrichtung wird der neue Glashalter aus dem Glashaltermagazin herausgezogen und in die Dosismeßposition gebracht.

Daraufhin werden Magazinverstelleinheit und Magazinhebeeinheit noch einmal betätigt, so daß das Magazin 11 in die Stellung zurückkehrt, in der es zu Beginn der Messung der Strahlendosis war. Daraufhin bewegt die Glaselementhaltertransportvorrichtung 90 den neuen Glashalter in Richtung auf das untere Gehäuseteil 64 der Kapsel. Die Vorrichtungen 70 und 50 werden gegenläufig betätigt, so daß das Dosimeter in das Magazin 11 eingeführt wird.

Aufgrund des Einsatzes des Magazinzufuhrmechanismus und der Vorrichtung zum Einsetzen und Herausziehen des Glashalters können die Glashalter automatisch aus den Dosimetern herausgenommen und in sämtliche Dosimeter eingesetzt werden; der Wechsel kann automatisch erfolgen.

Ein zweites Ausführungsbeispiel der vorliegenden Erfindung wird nun unter Bezugnahme auf Fig. 15 bis 18 beschrieben. Gemäß Fig. 6 wird ein Lochcode 63 zur Identifizierung des Glaselements 62 in die Wand des Glashalters 61 gestanzt, welche von der Wand, an der das Glaselement 62 befestigt ist, wegläuft. Aus Fig. 15 geht hervor, daß der Kapselcode 130, d.h. ein Codeteil zur Erkennung der Kapsel (d.h. des Dosimeters) auf der Außenseite des unteren Gehäuseteils 64 der Kapsel angebracht ist. Eine Ableseeinrichtung für den Erkennungscode ist vorgesehen, mit der die vom Lochcode 63 und dem Kapselcode 130 vorgegebenen Daten angezeigt werden; mit einer Datenkontrolleinheit werden die der Bestrahlungsdosis zugehörenden Meßwerte aufgezeichnet und überwacht.

Aus Fig. 16 wird ersichtlich, daß die Ableseeinrichtung für den Erkennungscode aus einem Kapselcode-Ableseteil 131, einem Lochcode-Ableseteil 133 und einer Eingangs/Ausgangsöffnung 134 besteht. Das Kapselcode-Ableseteil 131 befindet sich unter dem Dosimeter 60, das aus dem Magazin 11 herausgeführt wird. Das Lochcode-Ableseteil 133 ist so ausgelegt, daß eine Codierung des Lochcodes 63 des auf dem Gleittisch 115 mittels Glaselementhaltertransportvorrichtung 90 abgesetzten Glashalters 61 angezeigt werden kann. Wie aus Fig. 17 ersichtlich, besteht die Datenkontrolleinheit aus einer Zentraleinheit 135 (im folgenden ZE genannt), dem Festwertspeicher ROM 136 und dem Direktzugriffsspeicher RAM 137. Falls erforderlich, gehören zur Datenkontrolleinheit außerdem ein Diskettenantrieb 138 und ein Floppy Disk 139. Die von den Abschnitten 131 und 133 abgelesenen Codes werden in RAM 137 gespeichert oder auf Floppy Disk 139 genommen.

Die Eingabe/Ausgabeöffnung 134 besitzt, falls erforderlich, einen A/D-Wandler oder einen Speicher. Die ZE 135 kann Daten nach spezifischen Programmen verarbeiten, die in ROM 136 gespeichert oder auf Floppy Disk 139 aufgenommen sind.

Die Datenkontrolleinheit speichert die Werte der Bestrahlungsdosen aufgrund der mit der Erkennungscode-Ableseeinrichtung abgelesenen Codierung und verarbeitet diese Werte, wobei die gewünschten Kontrollwerte gebildet werden. Die Datenkontrolleinheit schließt das Strahlendosismeßteil 141 ein. Das Strahlendosismeßteil 141 besteht aus einem Photomultiplier, einem Integrationskreis und einem A/D-Wandlerkreis. Der Photomultiplier wandelt einen bestimmte Betrag des Fluoreszenzlichts in ein elektrisches Signal um und verstärkt dieses Signal. Im Integrationskreis wird die Ausgabe des elektrischen Signals des Photomultipliers integriert. Der A/D-Wandlerkreis wandelt die Ausgabe des Integrationskreises in digitale Meßwerte um.

In Fig. 17 bezeichnet die Zahl 142 den Regelkreis eines Bildschirms, die Zahl 143 einen Bildschirm, die Zahl 144 eine Tastatur, die Zahl 145 einen Tasteneingabekreis, die Zahl 146 einen Drucker-Antriebskreis, die Zahl 147 einen Drucker und die Zahl 148 eine Eingabe/Ausgabeöffnung für die Zufuhr der Daten, welche die von einem Glaselement gemessenen Strahlendosen darstellen.

Der Einsatz des beschriebenen zweiten Ausführungsbeispiels wird im folgenden erläutert. Die Magazine 11 enthalten jeweils 50 Dosimeter 60. Sie werden einzeln mit dem Magazinzufuhrmechanismus zugeführt. Jedes von diesem Mechanismus zugeführte Magazin 11 wird durch die Magazintransportvorrichtung 30 in eine bestimmte Position gebracht. In dieser Position drückt die Dosimeterschiebevorrichtung 50 die Dosimeter 60 einzeln aus dem Magazin 11 heraus. Der Magazinzufuhrmechanismus, die Magazintransportvorrichtung 30 und die Dosimeterschiebevorrichtung 50 werden in festgelegten Zeitabständen betätigt, die sich nach den von der ZE 135 ausgehenden Kontrollsignalen richten. Wenn ein Dosimeter 60 in die Position gebracht ist, in der das untere Gehäuseteil der Kapsel mit Hilfe der Abziehvorrichtung 70 des unteren Gehäuseteils herausgezogen werden soll, ermittelt die ZE, ob der Kapselcode 130 in Schritt S1 abgelesen werden muß (Fig. 18). Wenn ja, speichert die ZE in Schritt S2 die vom Ableseteil 131 abgelesenen Daten in RAM 137 (Fig. 18).

Daraufhin wird der Magnet 74 in Richtung Dosimeter 60 bewegt, wobei das Dosimeter 60 entriegelt wird. Der Abziehvorrichtung 70 des unteren Kapselteils wird in Schritt S3 ein Befehl erteilt, und sie zieht dann das untere Gehäuseteil 64 der Kapsel aus dem oberen Gehäuseteil 67 der Kapsel heraus. Dann wird in Schritt S4 der Glaselementhaltertransportvorrichtung 90 ein Befehl erteilt, und diese drückt den Glashalter 61 aus dem unteren Gehäuseteil 64 der Kapsel heraus und setzt ihn in der festgelegten Position auf Gleittisch 150 ab. In Schritt S5 ermittelt die ZE 135, ob der Glashalter 61 in der festgelegten Position abgesetzt wurde oder nicht. Wenn ja, ermittelt die ZE 135 in Schritt S6, ob die Codierung vom Lochcode 62 abgelesen wurde oder nicht. Im nächsten Schritt S7 werden die abgelesenen Codedaten in RAM 137 gespeichert.

Dann wird der Glashalter 61 in die Codeableseposition oder die Strahlendosismeßposition gebracht. In Schritt S8 wird die UV-Lichtquelle eingeschaltet und erzeugt ultraviolette Lichtstrahlen. Das ultraviolette Licht wird auf das mit Glashalter 61 gehaltene Glaselement 62 gerichtet und regt das Glaselement 62 zur Fluoreszenz an. Als Folge davon emittiert das Glaselement 82 Fluoreszenzlicht. In Schritt S8 nehmen die Speicher der ZE 135 die Ausgabedaten vom Strahlendosismeßteil 141 über die Eingabe/Ausgabeöffnung 148 auf. In Schritt S9 speichert die ZE 135 diese Ausgabewerte in RAM 137.

In Schritt S10 werden der Kapselcode 130, der Lochcode 63 und die Strahlendosis des Glaselements 62 auf Floppy Disk 139 genommen und dienen als Daten zur Erfassung und Überwachung der Strahlenexposition der Person, die das Dosimeter 60 an ihrem Körper getragen hat. Auf diese Weise werden verschiedene Einzelwerte aufgezeichnet, beispielsweise die jeweils abgelesene Strahlendosis, der davor abgelesene Wert der Strahlendosis, der Anfangswert der Strahlendosis, das laufende Ablesedatum, das Datum der davorliegenden Ablesung, die aus dem Lochcode 63 abgelesene Codierung (d.h. der das Glaselement identifizierende Code), der Kapselcode und die gesamte akkumulierte Strahlendosis jedes Dosimeters. In Schritt S11 werden diese Einzeldaten nach Wunsch für bestimmte Zeitintervalle oder nach Ablesen der Strahlendosis eines beliebigen Dosimeters verarbeitet, und man erhält die von der betreffenden Person akkumulierten Strahlendosen sowie die Strahlendosis, die diese Person in einem bestimmten Zeitraum erhalten hat, und ähnliche Daten. Von diesen Einzeldaten werden die zu überprüfenden Werte durch den Drucker 147 ausgedruckt oder am Bildschirm 143 angezeigt.

Im zweiten Ausführungsbeispiel der vorliegenden Erfindung wird der Lochcode 63 in jeden Glashalter 61 gestanzt, und an jedem Dosimeter 60 wird ein Kapselcode 130 angebracht. Zum Ablesen des Lochcodes 63 sowie eines Kapselcodes 130 werden die Codableseteile 131 und 133 am Dosimeter 60 vorgesehen. Daher können die verschiedenen Einzeldaten über Strahlendosen, die eine Person bis zur laufenden Ablesung einer Strahlendosis aufgenommen hat, abgerufen, verarbeitet und ausgedruckt oder angezeigt werden, so daß die Bestrahlungsdosen der betreffenden Person erfaßt und kontrolliert werden können. Wenn jede Person bei der Arbeit an dem Ort, an dem sie eine Strahlendosis abbekommen kann, das gleiche Dosimeter 60 am Körper trägt, sind sämtliche in diesem Dosimeter 60 aufakkumulierten Strahlendosen gleich der Gesamtsumme der Strahlungswirkung, welcher die Person während der gesamten davorliegenden Arbeitszeit ausgesetzt war. Deshalb kann das Dosimeter 60 als Identifizierungskarte verwendet werden, wenn der Kapselcode des Dosimeters 60 der betreffenden Person identisch mit ihrer Identifizierungsnummer ist. In diesem Fall kann auf eine gesonderte Identifizierungskarte verzichtet werden.

Auch im zweiten Ausführungsbeispiel kann ähnlich wie im ersten Ausführungsbeispiel nur eine Blende, vergleichbar mit der Blende 126 in Fig. 11, zur Messung der Strahlendosis des Glaselements 62 zwischen Glaselement 62 und Photomultiplier 122 eingesetzt werden, oder es können zur Abschätzung der Energie der Gamma- und Röntgenstrahlen zwei Blenden entsprechend den Blenden 126 und 127 aus Fig. 11 und 12 im Wechsel zwischen Glaselement 62 und Photomultiplier 122 eingesetzt werden.

In der Datenkontrolleinheit können die oberen Grenzwerte, bis zu denen jedes Glaselement Strahlung akkumulieren kann, aufgezeichnet werden. In diesem Fall wird der Glashalter 61 mit diesem Element 62, sobald die in Glaselement 62 akkumulierte Strahlung diesen oberen Grenzwert erreicht, aus dem unteren Gehäuseteil 64 der in Strahlendosismeßposition befindlichen Kapsel herausgezogen, und ein anderer Glaselementhalter 61 mit einem neuen Glaselement wird in Gehäuse 64 eingesetzt. Auf diese Weise kann die Strahlendosis durch Austausch des Glaselements 62 kontinuierlich gemessen werden.

Wenn der obere Grenzwert, bis zu dem jedes Glaselement Strahlendosis akkumulieren kann, aufgezeichnet wird, kann die von einer das Dosimeter 60 an ihrem Körper tragenden Person aufgenommene Strahlendosis durch Austausch des Glaselements 62 gegen ein neues Glaselement kontinuierlich gemessen werden, sobald die im Glaselement 62 akkumulierte Strahlung den oberen Grenzwert der akkumulierten Strahlung erreicht. Damit kann die Genauigkeit der Strahlendosismessung verbessert werden, und es ist möglich, die Strahlendosis von Personen, die bei der Arbeit einer Strahlung ausgesetzt werden können, zu erfassen und zu überwachen. Wenn diese Personen immer die gleichen Dosimeter 60 am Körper tragen, kann darüber hinaus die Energieabhängigkeit und die Richtungsabhängigkeit der Dosimeter innerhalb bestimmter Werte eingehalten werden, und die Strahlendosis dieser Personen kann jeden Tag, jede Woche oder jedes Jahr so lange überprüft werden, wie sich diese Personen an Orten aufhalten, an denen sie Strahlung ausgesetzt sind.

Wie bereits ausführlich beschrieben, besteht ein Aspekt der vorliegenden Erfindung darin, ein Gerät zur Messung der Strahlendosen von Dosimetern bereitzustellen, in dem der Magazinzufuhrmechanismus, die Magazintransportvorrichtung, die Dosimeterschiebevorrichtung und die Kapselabziehvorrichtung betätigt werden, wodurch die Glashalter automatisch aus den betreffenden Dosimetern herausgenommen und die Strahlendosis von den in den Glashaltern befindlichen Glaselementen gemessen werden.

Aufgrund eines zweiten Aspekts der vorliegenden Erfindung wird auch ein Gerät bereitgestellt, das automatisch und schnell die in jedem Dosimeter akkumulierte Gesamtdosis sowie die Strahlendosis der Dosimeter für bestimmte Überwachungszeiträume ablesen kann und mit dem es möglich ist, die Strahlendosiswerte einer Anzahl von Personen sehr wirksam zu erfassen und zu überprüfen.

## Patentansprüche

1. Gerät zur Messung von Strahlendosen mit Fluoreszenzglasdosimetern (60), welche aus einem oberen Kapselteil (67), einem mit diesem verriegelbaren unteren Kapselteil (64), einem Glaselementhalter (61) und einem darin gehalterten Fluoreszenzglaselement (62) bestehen, welches einen Transportmechanismus für die Fluoreszenzglasdosimeter (60) sowie ein Strahlendosismeßsystem (110) mit einer UV-Quelle (121) und einem Detektor (122) enthält, gekennzeichnet durch

a) einen Magazinwechsler (10), geeignet zum Zu- und Abtransport von Magazinen (11), in welchen die Dosimeter (60) angeordnet sind,

b) eine Magazintransportvorrichtung (30), geeignet zur Aufnahme der Magazine (11) aus dem Magazinwechsler (10) und zum Transport der Magazine (11) in eine Position, in welcher die Dosimeter (60) aus dem Magazin (11) entnehmbar sind,

c) eine Dosimeterverschiebevorrichtung (50), geeignet zum Herausschieben jeweils eines Dosimeters (60) aus dem Magazin (11),

d) eine Abziehvorrichtung (70), geeignet zum Herausziehen des unteren Kapselteils (64), welches den Glaselementhalter (61) und das Fluoreszenzglaselement (62) enthält, aus dem Dosimeter (60) mit einer Entriegelungseinrichtung (74) für die beiden miteinander verriegelten Kapselteile (64, 67), wobei durch einen Magneten (74) der an einem bestimmten Teil einer Kapselführung (75) befestigt ist ein Magnetblock aus einem Verriegelungsteil (69) des unteren Kapselteils (64) gelöst wird und

e) eine Glaselementhalter-Transportvorrichtung (90), geeignet zum Herausnehmen des Glaselementhalters (61) aus dem unteren Kapselteil (64) und zum Einrichten der Glaselementhalter (61) in einer festgelegten Position auf dem Strahlendosismeßsystem (110).

2. Ein Gerät gemäß Anspruch 1, dadurch gekennzeichnet, daß das Strahlendosismeßsystem (110) mindestens zwei Arten von Blenden (126, 127) mit unterschiedlicher Öffnungsfläche oder Öffnungsposition enthält, wobei die Blenden (126, 127) selektiv in eine zwischen dem Fluoreszenzglaselement (62) und dem Detektor (122) befindliche Öffnung eingeführt werden, so daß die Strahlenqualität, beispielsweise Gammaoder Röntgenstrahlen, bestimmt werden kann.

3. Ein Gerät nach Anspruch 1 oder 2, dadurch gekennzeichnet, daß das Strahlendosismeßsystem (110) Kalibrierfluoreszenzglaselemente (117) enthält, die in vorgegebener Position auf dem Tisch (115) angebracht sind un dieser Tisch (115) über einen bestimmten Weg hin- und herbewegt wird, so daß die Kalibrierfluoreszenzglaselemente (117) und die Fluoreszenzglaselemente (62) im Wechsel eingefahren werden und dabei eine Kalibrierstrahlendosis und die eigentliche Strahlendosis gemessen wird.

4. Ein Gerät nach Anspruch 1 oder einem der folgenden, gekennzeichnet durch eine Ableseeinrichtung für einen Erkennungscode auf dem Glaselementhalter (61) oder auf dem Dosimeter (60).

5. Ein Gerät nach Anspruch 4, gekennzeichnet durch eine Datenkontrolleinrichtung zur Messung der vom Fluoreszenzglaselement (61) stammenden Strahlendosis unter Zuhilfenahme des von der Ableseeinrichtung für die Erkennungscodierung abgelesenen Erkennungscodes, zum Speichern der Meßwerte der Strahlendosis und zur Ermittlung von Kontrollwerten zur Bestimmung der Strahlendosis.

## Claims

1. Instrument for measuring radiation doses using fluorescent glass dosimeters (60), which include an upper capsule portion (67), a lower capsule portion (64), which is lockable with said upper capsule portion, a glass element holder (61) and a fluorescent glass element (62), which is retained therein and has a means for conveying the fluorescent glass dosimeters (60) plus a radiation dose measuring system (110), having a UV source (121) and a detector (122), characterised by

a) a magazine changer (10), suitable for conveying to and fro magazines (11), in which the dosimeters (60) are disposed,

b) a magazine conveyor (30), suitable for receiving the magazines (11) from the magazine changer (10) and for conveying the magazines (11) into a position in which the dosimeters (60) are removable from the magazine (11),

c) a dosimeter displacing means (50), suitable for pushing one dosimeter (60) at a time from the magazine (11),

d) a withdrawing means (70), suitable for drawing the lower capsule portion (64), which contains the glass element holder (61) and the fluorescent glass element (62), from the dosimeter (60) using a releasing means (74) for releasing the two interlocked capsule portions (64, 67), a magnetic block being released from a locking member (69) of the lower capsule portion (64) by means of a magnet (74), which is mounted on a predetermined portion of a capsule guide means (75), and

e) a glass element holder conveyor (90), suitable for removing the glass element holder (61) from the lower capsule portion (64) and for installing the glass element holder (61) in a fixed position on the radiation dose measuring system (110).

2. An instrument according to claim 1, characterised in that the radiation dose measuring system (110) comprises at least two types of screens (126, 127) with different opening areas or opening positions, the screens (126, 127) being selectively introduced into an opening, which is situated between the fluorescent glass element (62) and the detector (122), so that the radiation quality, for example gamma-radiation or X-radiation, can be determined.

3. An instrument according to claim 1 or 2, characterised in that the radiation dose measuring system (110) comprises calibrating fluorescent glass elements (117), which are mounted on the table (115) in a prescribed position, and this table (115) is moved backwardly and forwardly over a predetermined path, so that the calibrating fluorescent glass elements (117) and the fluorescent glass elements (62) are alternately retracted, and a calibrating radiation dose and the actual radiation dose are thereby measured.

4. An instrument according to claim 1 or one of the subsequent claims, characterised by a reading means for reading an identification code on the glass element holder (61) or on the dosimeter (60).

5. An instrument according to claim 4, characterised by a data controlling means for measuring the radiation dose, arising from the fluorescent glass element (61), by means of the identification code, which is read by the reading means for the identification coding, for storing the measurement values of the radiation dose and for detecting control values for determining the radiation dose.

## Revendications

1. Appareil pour la mesure de doses de radiation au moyen de dosimètres (60), à verre fluorescent, qui sont constitués d'un élément de capsule supérieur (67), d'un élément de capsule inférieur (64) verrouillable avec celui-ci, d'un support (61) d'élément en verre et d'un élément en verre fluorescent (62) maintenu dans celui-ci, appareil qui contient un mécanisme de transport pour les dosimètres à verre fluorescent (60) ainsi qu'un système de mesure de doses de radiation (110) comportant une source d'UV (121) et un détecteur (122), caractérisé par :

(a) un échangeur (10) de magasins, approprié à l'amenée et à l'enlèvement des magasins (11) dans lesquels sont disposés les dosimètres (60),

(b) un dispositif de transport (30) de magasins, approprié à la réception des magasins (11) hors de l'échangeur (10) de magasins et au transport des magasins (11) dans une position dans laquelle les dosimètres (60) peuvent être retirés du magasin (11),

(c) un dispositif de poussée (50) des dosimètres, approprié à la poussée chaque fois d'un dosimètre (60) hors du magasin (11),

(d) un dispositif d'extraction (70), approprié à l'extraction hors du dosimètre (60) de l'élément de capsule inférieur (64) qui contient le support (61) d'élément en verre et l'élément en verre fluorescent (62), comportant un dispositif de déverrouillage (74) pour les deux éléments de capsule (64, 67) verrouillés l'un avec l'autre, un bloc aimanté étant détaché d'un élément de verrouillage (69) de l'élément de capsule inférieur (64) au moyen d'un aimant (74) qui est fixé à une partie déterminée d'un guide (75) de capsules, et

(e) un dispositif de transport (90) de supports d'éléments en verre, approprié à l'enlèvement du support (61) d'élément en verre hors de l'élément de capsule inférieur (64) et au réglage des supports (61) d'éléments en verre dans une position déterminée sur le système de mesure (110) de doses de radiation.

2. Appareil selon la revendication 1, caractérisé en ce que le système de mesure (110) de doses de radiation contient au moins deux types de diaphragmes (126, 127) à aire d'ouverture ou position d'ouverture différentes, les diaphragmes (126, 127) étant sélectivement insérés dans une ouverture se trouvant entre l'élément en verre fluorescent (62) et le détecteur (122), de sorte que la qualité de la radiation, par exemple rayons gamma ou rayon X, peut être déterminée.

3. Appareil selon la revendication 1 ou 2, caractérisé en ce que le système de mesure (110) de doses de radiation contient des éléments en verre fluorescent étalonnés (117) qui sont placés en position préétablie sur la table (115) et cette table (115) est soumise à un mouvement de va-et-vient déterminé, de sorte que les éléments en verre fluorescent étalonnés (117) et les éléments en verre fluorescent (62) sont amenés alternativement, et ainsi une dose de radiation étalonnée et la dose de radiation proprement dite sont mesurées.

4. Appareil selon la revendication 1 ou l'une quelconque des suivantes, caractérisé par un dispositif de lecture d'un code de reconnaissance sur le support (61) d'élément en verre ou sur le dosimètre (60).

5. Appareil selon la revendication 4, caractérisé par un dispositif de contrôle de données pour la mesure de la dose de radiation provenant de l'élément en verre fluorescent (61), à l'aide du code de reconnaissance lu par le dispositif de lecture du code de reconnaissance, pour la mise en mémoire des valeurs mesurées de la dose de radiation et pour l'établissement de valeurs de référence pour la détermination de la dose de radiation.

FIG. 1

ULTRAVIOLET RAYS

F I G. 2B

F I G. 2A

F I G. 3

F I G. 4

F I G.   5

F I G. 6

F I G. 7A

F I G. 7B

EP 0 329 131 B1

EP 0 329 131 B1

F I G. 8A

F I G. 8B

67

115

116

117

114

113

111

62

64

J

112

ULTRAVIOLET RAYS

# F I G. 9A

115

116

117

114

113

111

63
61
62

64

112

ULTRAVIOLET RAYS

# F I G. 9B

FLUORESCENT
DOSE

61

63

62

## F I G. 10

FLUORESCENT
DOSE

63

61

62    126

## F I G. 11

FLUORESCENT
DOSE

63

61

62    127

## F I G. 12

F I G. 9C

F I G. 13

F I G. 14

24

FIG. 15

FIG. 16

F I G. 17

F I G. 18